# FASCICULE DE BREVET EUROPEEN

(11) **EP 1 213 811 B1**
(45) Date de publication et mention de la délivrance du brevet: **14.12.2011**
(21) Numéro de dépôt: 01402364.2
(22) Date de dépôt: 13.09.2001
(51) Int. Cl.: H02G 3/12

(54) **Boîte modulaire pour l'implantation encastrée d'un ou plusieurs appareillages électriques dans un conduit de câblage de profondeur inférieure à celle des appareillages et boîtier formé de l'assemblage d'au moins deux de ces boîtes**
Modulare Dose zum versenkten Einbau von einem Gerät oder mehrerer Geräte in einen Kabelkanal mit einer kleineren Tiefe und mit mindestens zwei Dosen hergestelltes Gehäuse
Modular box for flush mounting of one or several electrical apparatus in a cable duct less deep than the apparatus and housing made by assembling at least two of these boxes

(30) Priorité: 15.09.2000 FR 0011799
(43) Date de publication de la demande: 12.06.2002
(73) Titulaire: PLANET WATTOHM, 60300 Senlis (FR)
(72) Inventeur: Coutant, Régis, 60117 Vauciennes (FR); Xerri, Frédéric, 87000 Limoges (FR)
(74) Mandataire: Santarelli

(56) Documents cités:
- EP-A- 0 721 245
- EP-A- 0 971 466
- DE-U- 7 040 540
- FR-A- 2 724 498

## Description

La présente invention concerne d'une manière générale la fixation d'un quelconque appareillage, tel qu'une prise de courant ou de télécommunication, dans un quelconque conduit de câblage, tel qu'une plinthe, une moulure, une colonne ou autre goulotte, utilisé dans l'équipement électrique et/ou de télécommunication des intérieurs domestiques ou professionnels.

On sait que dans certaines installations, que ce soit en construction neuve ou en rénovation, on utilise souvent, pour réaliser un câblage électrique ou optique, des conduits fixés contre les murs. Ces conduits courent ainsi horizontalement le long des murs, à leur base à la façon de plinthes ou à leur sommet à la façon de moulures, ou encore verticalement contre un mur, dans un angle ou sur une colonne. De tels conduits offrent intérieurement un chemin de câblage protégé et fonctionnel pour permettre une desserte aisée et fiable d'appareillages électriques ou de télécommunication divers.

Ces appareillages électriques sont généralement logés individuellement ou par série dans un boîtier ou cadre de support qui est le plus souvent fixé directement sur le mur, avec un encastrement plus ou moins complet dans ce dernier, et qui est accolé au conduit, voire même chevauche localement celui-ci transversalement.

Une telle disposition a pour avantage de permettre une mise en place rapide et de faciliter les interventions ultérieures. Mais elle a pour inconvénient de conduire à une emprise assez importante sur le mur (ou la colonne), ce qui s'avère relativement inesthétique et difficilement conciliable avec certains problèmes ponctuels d'encombrement. De plus, il n'est pas toujours ni souhaitable ni commode de réaliser un encastrement sur mesure du boîtier, avec le ou les appareillages qu'il renferme, dans le mur récepteur.

Dans d'autres installations, le conduit, qui est alors communément appelé goulotte, offre une profondeur suffisante pour recevoir, non seulement les conducteurs électriques, mais également le ou les appareillages à fixer sur toute la profondeur de ces derniers. Dans ce type d'installation, les appareillages sont, soit directement rapportés sur la goulotte en question, soit logés dans un boîtier ou sur un cadre support qui est lui-même rapporté sur cette goulotte. Une plaque ajourée (ou plastron) est généralement prévue pour se substituer localement au couvercle de la goulotte de manière à offrir, au travers d'un ajour de dimensions adaptées, un accès à la face avant utile du ou des appareillages, laquelle affleure alors le plastron ainsi rapporté. Le boîtier renfermant le ou les appareillages est ainsi entièrement logé dans la goulotte, sans qu'il ne fasse saillie, ni de l'avant ni de l'arrière, de celle-ci, la profondeur de la goulotte étant suffisante pour contenir le boîtier et le ou les appareillages qu'elle contient sur toute leur profondeur.

Ce type d'installation, qui a pour avantage de réduire l'emprise en largeur sur le mur, a pour inconvénient majeur d'imposer une profondeur relativement importante de la goulotte sur toute sa longueur, ce qui s'avère fort inesthétique et le plus souvent très pénalisant quant à l'ergonomie générale du volume intérieur délimité par le mur en question. On comprend en effet que la goulotte, du fait de sa profondeur, forme une saillie relativement importante sur ce mur, gênant l'implantation du mobilier, voire même la circulation des personnes, chariots, ou autres véhicules.

Dans d'autres installations encore, comme illustré par exemple par le document FR 2 729 255 (ou EP- 0 721 245), chaque appareillage électrique est reçu individuellement dans une boîte comportant une enveloppe latérale délimitant un volume intérieur d'accueil de l'appareillage, fermée à l'arrière par un fond et ouverte à l'avant et pourvue d'une part de moyens pour sa fixation dans le conduit de telle manière que, traversant le fond de ce conduit à la faveur d'un ajour ménagé dans ce dernier, la boîte déborde, avec l'appareillage qu'elle contient, en arrière dudit conduit, et d'autre part de moyens de réception de l'appareillage électrique dans son volume intérieur de telle manière que, après fixation de la boîte dans le conduit, la face avant de cet appareillage affleure approximativement la face avant du conduit. Sur la partie surabondante de sa profondeur, qui fait saillie en arrière du fond du conduit, la boîte est reçue dans un évidement du mur spécialement ménagé en correspondance.

La boîte s'étend ainsi pour partie dans le conduit et pour partie dans le mur sous-jacent contre lequel le conduit est fixé. Cette configuration offre l'avantage d'augmenter autant que possible l'emprise en largeur et la saillie en profondeur sur le mur, qui sont limitées à celles du conduit. Ce conduit peut ainsi présenter une profondeur réduite, ajustée pour permettre simplement le logement et la protection des câbles.

Toutefois, l'utilisation d'une telle boîte d'encastrement individuelle présente un inconvénient majeur : chaque boîte est dédiée à un appareillage unique dont les dimensions sont limitées par celles du volume intérieur de la boîte. Par conséquent, si l'on souhaite implanter plusieurs appareillages, il est nécessaire d'aligner à la suite les unes des autres un nombre correspondant de boîtes, en laissant entre chaque boîte un espace interstitiel inutilisé. On comprend que l'on augmente ainsi considérablement l'encombrement de cet ensemble de boîtes et d'appareillages le long du conduit. De plus, lorsque l'on souhaite implanter un appareillage de grande dimension suivant la direction longitudinale du conduit, tel qu'un appareillage double jumelé (par exemple, un double interrupteur, une double prise, ou un ensemble prise et interrupteur), il est nécessaire d'utiliser une boîte spéciale de dimension adaptée. Par conséquent, pour pouvoir satisfaire l'ensemble des configurations envisageables, l'installateur doit pouvoir disposer de plusieurs types de boîte, ce qui, d'une part pénalise son organisation personnelle, et d'autre part impose aux fabricants et aux distributeurs un référencement multiple au détriment des coûts.

Le but de l'invention est de remédier autant que possible à cet inconvénient en proposant une boîte du type précité, présentant certaines caractéristiques de modularité.

A cet effet, on propose selon l'invention une boîte conforme à la revendication 1.

On obtient ainsi, à partir de deux boîtes identiques de ce type, modulaires, un boîtier double apte à accueillir deux appareillages juxtaposés ou un appareillage unitaire de grande taille. Il est donc possible, au moyen d'un seul type de boîte modulaire, proposé sous une référence unique standard, de réaliser un boîtier d'ensemble modulable, adaptable au nombre et à la taille du ou des appareillages à implanter.

On connaît, d'après le document FR - A - 2 724 498, une boîte destinée à être encastrée dans un mur. Celle-ci comporte une paroi latérale comportant des parois droites dans lesquelles sont prévus des affaiblissements délimitant des parties de paroi enlevables. Cette paroi droite comporte, pour son accouplement à la paroi droite d'une autre boîte, des éléments situés à proximité de ces parties enlevables. L'enlèvement de ces parties de paroi ne permet que la mise en place d'un anneau carré de séparation, ou le passage de fils électriques.

Pour permettre l'associativité de trois boîtes ou plus, on pourra avantageusement prévoir que chaque boîte modulaire présente deux lignes d'amorce de rupture agencées pour permettre le détachement de deux portions latérales pour la réunion d'au moins trois boîtes.

De préférence, lorsque la boîte présente deux lignes d'amorce de rupture pour permettre l'associativité de trois boîtes modulaires ou plus, les deux lignes d'amorce de rupture sont symétriques de part et d'autre de l'axe de l'enveloppe cylindrique.

Selon un mode d'exécution avantageux, les moyens de fixation au conduit comportent au moins deux patins latéraux agencés extérieurement sur l'enveloppe pour venir en prise avec deux glissières associées ménagées longitudinalement sur le fond du conduit. Ce mode d'assujettissement de la boîte au conduit est non seulement simple à réaliser, mais également commode à mettre en oeuvre pour l'installateur ou l'intervenant ultérieur. Il suffit en effet d'engager, par exemple par un simple clipsage, les patins avec les glissières associées du socle du conduit, puis d'ajuster la position longitudinale de la boîte sur le conduit en faisant glisser les patins dans la glissière.

Pour faciliter encore la mise en oeuvre et assurer une immobilisation plus ferme de la boîte sur le fond du conduit, on pourra prévoir que l'un au moins des patins latéraux de fixation est mobile latéralement entre une configuration de blocage par friction sur la glissière correspondante du conduit, une configuration de coulissement libre sur ladite glissière et une configuration de libération complète de sa prise avec ladite glissière.

Avantageusement alors le patin mobile est soumis à l'action d'un organe de verrouillage mobile entre deux positions, l'une de verrouillage maintenant le patin mobile dans sa configuration de blocage sur la glissière et l'autre de déverrouillage laissant le patin mobile libre de revenir en configuration de coulissement libre sur la glissière ou de libération complète de sa prise avec la glissière.

Par exemple, l'organe de verrouillage du patin mobile comporte un élément à came monté pivotant sur l'enveloppe et offrant une prise quelconque pour son actionnement à pivotement entre deux positions angulaires constituant ses positions de verrouillage et de déverrouillage précitées. En particulier, les deux positions angulaires de l'élément à came peuvent être séparées par un quart de tour. Cela est le cas par exemple lorsque l'élément à came se compose d'un tourillon reçu pour pivoter librement dans un puits ou palier ménagé sur un bossage extérieur de l'enveloppe, d'une tête disposée à l'une des deux extrémités du tourillon et sur laquelle est ménagée une empreinte d'actionnement destinée à coopérer avec un outil du type tournevis, et d'un sabot disposé à l'autre extrémité du tourillon et présentant une forme globalement parallélépipédique allongée transversalement à l'axe de pivotement du tourillon.

Pour fiabiliser le verrouillage, on peut de plus prévoir que le sabot de l'élément à came est pourvu d'une saillie de calage apte à être reçue dans une empreinte ménagée sur une partie correspondante de l'enveloppe pour immobiliser temporairement l'élément à came en position de verrouillage.

Pour simplifier la fabrication et réduire les coûts, l'élément à came, avec son tourillon, et sa tête et son sabot, est réalisé en une seule pièce, en matière plastique moulée.

De même, les patins latéraux de fixation sont réalisés en une seule pièce, en matière plastique moulée avec le reste de l'enveloppe. Dans ce cas, la mobilité du patin mobile résulte d'une flexibilité élastique de ce patin, avec une configuration de repos correspondant à la configuration de coulissement libre sur la glissière correspondante du conduit, en prise avec celle-ci.

Toujours dans un mode de réalisation avantageux, les moyens de fixation au conduit comportent des pattes d'appui rigides ménagées en saillie extérieure radiale de l'enveloppe pour prendre appui sur le fond du conduit. Les moyens de fixation peuvent de plus comporter au moins deux doigts de verrouillage ménagés en saillie extérieure de l'enveloppe, sensiblement sur la même section que les pattes d'appui rigides, pour venir, après déformation radiale de l'enveloppe, en prise avec la glissière correspondante du fond du conduit.

Pour faciliter les opérations d'installation, on prévoit également selon l'invention un boîtier formé de l'assemblage d'au moins deux boîtes telles que définies ci-dessus, réunies, après détachement de leur portion latérale, par leur ouverture latérale et comportant de plus des moyens de liaison pour assurer une cohésion autonome de l'ensemble qu'elles forment. Les boîtes modulaires réunies forment ainsi, avant même leur implantation dans le conduit, un ensemble monobloc constituant un boîtier modulable multiple (double ou triple, voire davantage) apte à recevoir (éventuellement en prémontage) l'ensemble du ou des appareillages à implanter.

Avantageusement alors, les moyens de liaison sont ménagés, au moins pour partie, sur l'enveloppe latérale, le long du bord de découpe. On peut par exemple prévoir que les moyens de liaison comportent d'une part des glissières ménagées intérieurement sur l'enveloppe latérale de chaque boîte, le long de la ligne d'amorce de rupture ou, après détachement de la partie latérale, du bord de découpe, et d'autre part une clavette en forme de cornière dont les branches sont reçues dans les glissières adjacentes des deux boîtes consécutives. De préférence alors, pour réduire les coûts de fabrication, les glissières de liaison sont venues de matière, en une seule pièce en matière plastique moulée, avec le reste de l'enveloppe latérale.

D'autres caractéristiques et avantages de l'invention apparaîtront à la lecture de la description qui suit de deux modes de réalisation particuliers donnés à titre d'exemples non limitatifs. Il sera fait référence aux dessins en annexe, parmi lesquels :
- la figure 1 est une vue en perspective d'une boîte modulaire d'encastrement conforme à l'invention selon un premier mode de réalisation ;
- la figure 2 est une vue en perspective d'un boîtier double formé de la réunion, après détachement de leur portion latérale, de deux boîtes identiques à celle de la figure 1 ;
- la figure 3 est une vue en perspective, avec arrachement localisé, illustrant l'utilisation des deux boîtes réunies de la figure 2 pour l'implantation encastrée d'un appareillage électrique double dans un profilé de profondeur inférieure à celle de l'appareillage en cause ;
- la figure 4 est une vue en coupe axiale dans le plan IV de la figure 3, montrant la boîte fixée sur le socle du conduit ;
- la figure 5 est une vue en perspective d'une boîte modulaire conforme à l'invention, selon un second mode de réalisation ;
- la figure 6 est une vue en perspective d'un boîtier triple formé de l'assemblage, après détachement de leurs portions latérales concernées, de trois boîtes identiques à celle de la figure 5.

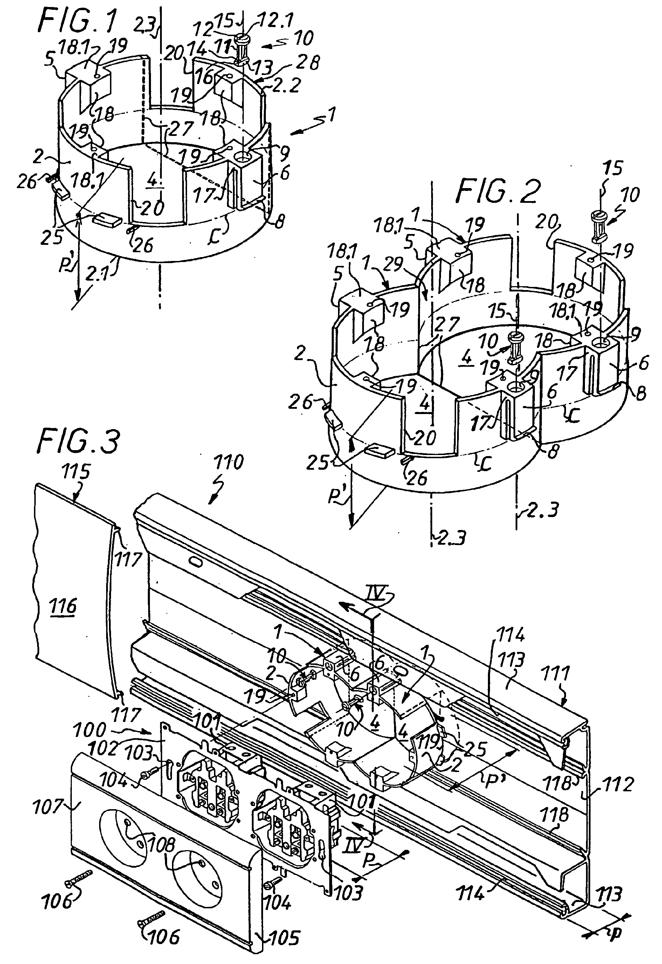

En référence aux figures, et en particulier à la figure 3, il s'agit, globalement, de réaliser l'implantation encastrée d'un appareillage électrique 100, sur un conduit de câblage 110 avec un encastrement complet de l'appareillage 100 dans le conduit 110, l'appareillage affleurant approximativement, en façade avant, le conduit.

L'appareillage électrique 100 représenté à la figure 3 est une double prise de courant dont la constitution, connue en elle-même, et ne faisant pas spécifiquement partie de la présente invention, ne sera pas décrite dans le détail. Il suffit de mentionner ici que l'appareillage 100 comporte, de manière usuelle, deux mécanismes de prise femelle 101. Ces deux mécanismes, jumelés, sont solidaires d'une plaque de fixation commune 102. Cette plaque de fixation, communément appelée support, présente à ses deux extrémités, deux perçages 103 propres au passage de vis 104 nécessaires à la fixation recherchée, comme cela sera mieux expliqué ultérieurement. L'ensemble de l'appareillage, formé par le mécanisme 101 et sa plaque de fixation 102, présente une profondeur hors tout notée P et est masqué par un enjoliveur 105 que deux vis 106 permettent d'assujettir au mécanisme 101. Cet enjoliveur présente une face avant utile 107 sur laquelle les moyens d'interface avec l'extérieur (en l'espèce, les trous d'insertion 108 des broches d'une prise de courant mâle correspondante) sont accessibles.

Le conduit de câblage 110, dont la constitution ne sera pas non plus décrite dans le détail, comporte principalement un socle 111 qui se présente globalement sous la forme d'un profilé, par exemple en matière plastique extrudée ou en matériau métallique tel que de l'aluminium filé ou de l'acier formé. Ce socle 111 possède un fond plat 112 et deux ailes longitudinales 113 formées par des retours latéraux à angle droit du fond 112. Les deux ailes 113 présentent une hauteur p qui correspond sensiblement à la profondeur hors tout du conduit. La profondeur hors tout p du conduit 110 est sensiblement inférieure à la profondeur P de l'appareillage 100.

De part et d'autre de son plan médian, le fond 112 du socle 111 est pourvu, sur sa face intérieure ou avant, de deux lames 118, qui, inclinées l'une vers l'autre forment des glissières ou rails de fixation destinés à coopérer avec le dispositif selon l'invention. Ces glissières 118 sont ici venues de matière avec le reste du socle 111, par exemple par extrusion. Mais elles pourraient également être rapportées, par exemple par soudure, rivetage, etc.

Un couvercle 115 est rapporté sur le socle 111 du conduit 110 et est pourvu, à cet effet, sur ses deux bords latéraux, de deux bourrelets longitudinaux 117 aptes à venir en prise dans deux gorges longitudinales 114 correspondantes ménagées au sommet des ailes 113 du socle 111.

Le montage de l'appareillage 100 dans le conduit 110 s'effectue par l'intermédiaire d'un boîtier (voir figures 2 et 3) formé par la réunion de deux boîtes modulaires d'encastrement 1 conformes à un premier mode de réalisation de l'invention.

Chaque boîte 1 comporte, conformément à la figure 1, une enveloppe latérale cylindrique 2 d'axe 2.3 dont le bord arrière 2.1 est fermé par un fond 4 plein et plat, et dont le bord avant 2.2 est ouvert. L'enveloppe 2 délimite, avec son fond 4, un volume intérieur apte à recevoir un mécanisme d'appareillage électrique unique et de taille restreinte tel que chacun des deux mécanismes 101 de l'appareillage double 100 puis isolément. Pour permettre le passage des câbles raccordés à l'appareillage, l'enveloppe 2 est ajourée, ici par des créneaux 20.

Pour permettre l'encastrement complet de l'appareillage électrique 100 dans le conduit 110, sans que l'appareillage 100 ne fasse saillie à l'avant du conduit 110, compte tenu de sa profondeur P qui est supérieure à celle p de ce conduit, la boîte 1 présente une profondeur P' légèrement supérieure à celle P de l'appareillage 100 et est agencée dans le conduit 110 de manière à traverser une ouverture 119 ménagée en correspondance dans le fond 112 du socle 111 du conduit 110 et à former par elle-même dans ce fond 112 un renfoncement d'accueil de la partie arrière de l'appareillage 100 qui déborde en profondeur du conduit 110.

En correspondance avec le contour cylindrique de l'enveloppe 2, l'ouverture 119 ménagée dans le fond 112 du socle 111 du conduit 110 présente un contour circulaire sensiblement de même diamètre.

Pour sa fixation sur le socle 111 du conduit 110, la boîte 1 comporte des moyens de fixation ménagés extérieurement sur l'enveloppe 2 suivant un cercle C approximativement médian, pour coopérer avec les glissières 118 équipant le fond 112 du socle 111. Dans l'exemple présenté, deux sortes de moyens de fixation ont été prévues, utilisées alternativement en fonction du type de conduit 100 et, partant, de l'écartement des glissières 118 équipant le fond 112 du socle 111 de ce conduit.

La boîte 1 comporte ainsi des premiers moyens de fixation, compatibles avec un conduit 100 dont le socle 111 est pourvu de glissières à large écartement. Ces premiers moyens de fixation sont constitués de deux patins latéraux d'encliquetage 5, 6 ménagés extérieurement sur l'enveloppe 2. Ces deux patins, diamétralement opposés, sont pourvus chacun d'un talon ou lame 7, 8 agencé suivant le cercle C précité pour venir en prise avec les glissières 118 équipant le fond 112 du socle 111 du conduit 110.

Plus précisément, le patin 5 est relativement rigide, tandis que le patin 6 possède une certaine mobilité radiale, c'est-à-dire suivant une direction perpendiculaire à la direction longitudinale du conduit 110. Le patin 6 est ainsi mobile entre une configuration de blocage par friction ou serrage sur la glissière correspondante 118 du socle 111 du conduit 110, une configuration de coulissement libre sur cette glissière et une configuration de libération complète de sa prise avec cette glissière, permettant l'extraction de la boîte 1.

En l'espèce, la boîte 1 est réalisée en une seule pièce, par exemple en matière plastique moulée ou en matériau métallique tel que du Zamak. En particulier, les patins 5, 6 sont venus de matière avec le reste de la boîte 1. Dans ces conditions, la mobilité du patin mobile 6 résulte d'une flexibilité élastique propre de ce patin, avec une configuration de repos correspondant à la configuration de coulissement libre sur la glissière correspondante 118, en prise avec celle-ci.

Le placement et le maintien du patin mobile 6 dans ses configurations de blocage par friction ou de libération sont obtenus par une action extérieure forçant la flexion du patin mobile 6 à l'encontre de son élasticité propre.

La flexion du patin mobile 6 vers sa configuration de libération peut par exemple être obtenue (lorsque l'on souhaite occasionnellement démonter la boîte 1) à l'aide d'un outil du type tournevis qui exercera sur ledit patin un effort d'escamotage vers l'intérieur en vue de son désengagement de la glissière 118 concernée.

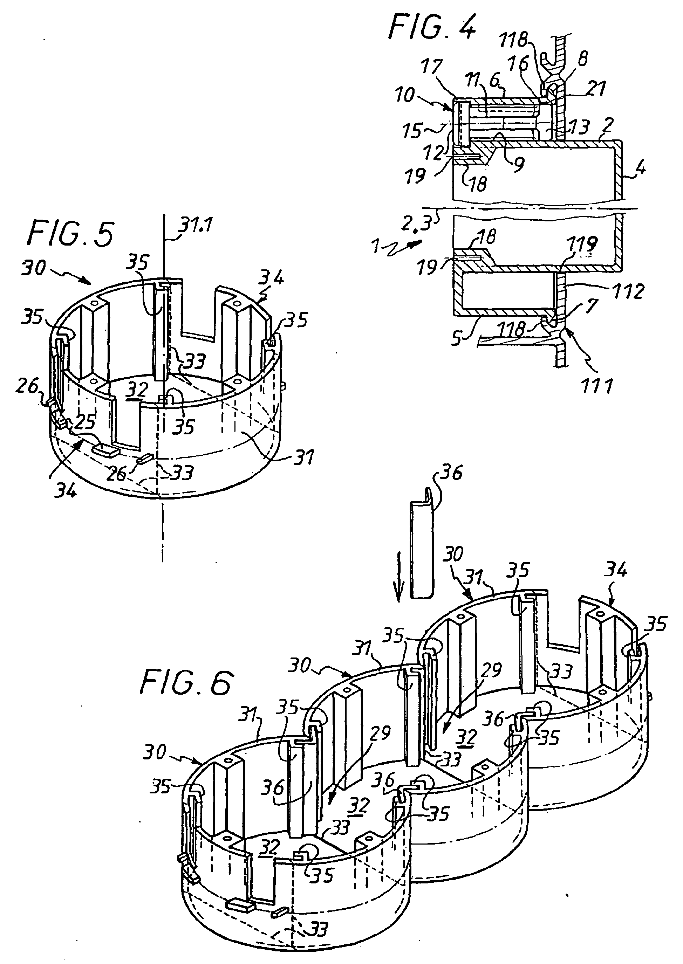

En ce qui concerne le placement et le maintien du patin mobile 6 dans sa configuration de blocage par friction, des moyens de verrouillage spécifiques sont prévus. Plus précisément, le patin mobile 6 est soumis à l'action d'un organe de verrouillage 10 qui est mobile entre deux positions, l'une de verrouillage (illustrée par la figure 4) maintenant le patin mobile 6 dans sa configuration de blocage sur la glissière 118 et l'autre de déverrouillage laissant ce patin mobile 6 libre de revenir en configuration de coulissement libre sur la glissière 118 ou de libération complète de sa prise avec cette glissière.

Dans l'exemple illustré, l'organe de verrouillage 10 se présente sous la forme d'un élément à came monté sur l'enveloppe 2 de la boîte 1 pour pivoter autour d'un axe 15 parallèle à l'axe 2.3 de l'enveloppe cylindrique 2 et adjacent au patin mobile 6, pour agir sur ce dernier radialement à la façon d'une came. L'organe de verrouillage 10 peut ainsi pivoter entre deux positions angulaires constituant ses positions de verrouillage et de déverrouillage de ce patin mobile 6. Cet élément à came 10 se compose d'un tourillon 11 reçu pour pivoter librement dans un puits ou palier 9 ménagé sur l'enveloppe 2, dans un bossage extérieur 17 adjacent à son bord avant 2.2, d'une tête 12 disposée à l'une des deux extrémités du tourillon 11 et sur laquelle est ménagée une empreinte 12.1 offrant une prise pour la tête correspondante d'un outil du type tournevis, et d'un sabot 13 disposé à l'autre extrémité du tourillon 11 et présentant une pointe d'appui 16 émoussée.

Le sabot 13 présente une forme globalement parallélépipédique, allongée transversalement à l'axe de pivotement 15 du tourillon 11 dans le puits 9 et émoussée à ses angles. En pivotant vers sa position de verrouillage, dans laquelle il s'étend perpendiculairement à la lame 8 du patin mobile 6, c'est-à-dire perpendiculairement à la direction longitudinale du conduit 110, le sabot 13 vient, par sa pointe émoussée 16, au contact de la face intérieure du patin mobile 6 concerné et glisse contre celle-ci pour repousser, à la façon d'une came, le patin mobile 6 vers l'extérieur, en appui serré contre la glissière 118 correspondante du socle 111 du conduit 110. Cette configuration finale de verrouillage est illustrée par la figure 4.

Inversement, en pivotant à partir de cette position de verrouillage vers sa position de déverrouillage sensiblement parallèle à la lame 8 du patin mobile 6, c'est-à-dire sensiblement parallèle à la direction longitudinale du conduit 110, le sabot 13 glisse par sa pointe émoussée 16 contre la face intérieure du patin mobile 6 pour s'en écarter progressivement jusqu'à la libérer de sa contrainte. On notera d'ailleurs que, dès que le sabot 13 s'écarte de sa position de verrouillage perpendiculaire à la lame 8 du patin mobile 6, ce patin mobile 6 tend à revenir spontanément vers sa configuration de repos correspondant à sa configuration de coulissement libre sur la glissière 118 correspondante et, par conséquent, à repousser, sous l'effet de son élasticité propre, l'élément à came 10 en position de déverrouillage.

On réalise ainsi, grâce à l'élément à came 10, un verrouillage ou un déverrouillage commode et rapide du patin mobile 6 dans sa configuration de blocage par friction. Ce verrouillage/déverrouillage est du type à commande quart de tour, les deux positions angulaires de verrouillage et de déverrouillage de l'élément à came 10 étant séparées par un quart de tour.

En outre, le sabot 13 de l'élément à came 10 est pourvu d'une saillie de calage 21 apte à être reçue dans une empreinte (non référencée aux figures) ménagée sur une partie correspondante de l'enveloppe 2 pour immobiliser temporairement l'élément à came 10 en position de verrouillage. Plus précisément, dans l'exemple illustré, la saillie de calage 21 est ménagée sur la pointe 16 du sabot 13, tandis que l'empreinte de réception de cette saillie est ménagée sur la face intérieure du patin mobile 6 au droit de l'axe de pivotement 15 de l'élément à came 10.

Sur le même principe, une solution alternative équivalente pourrait consister à prévoir que la saillie de calage du sabot 13 de l'élément à came 10 soit ménagée sur la face de dessus 14 de ce sabot (solution non retenue dans l'exemple illustré). L'empreinte de réception de cette saillie serait alors ménagée dans un épaulement inférieur d'extrémité du puits de réception 9, tandis que la tête 12 de l'élément à came 10 serait en butée contre un épaulement supérieur d'extrémité du puits 9, de telle sorte que la face de dessus 14 du sabot 13 de l'élément à came 10 soit rappelé en appui serré contre l'épaulement d'extrémité du puits 9 à la faveur d'une légère déformation élastique de l'ensemble de l'élément à came 10.

En l'espèce, le tourillon 11 de l'élément à came 10 présente globalement une forme de profilé à section en forme de croisillon.

L'élément à came 10 avec son tourillon 11, sa tête 12 et son sabot 13, peut avantageusement être réalisé en une seule pièce en matière plastique moulée.

Des seconds moyens de fixation de la boîte 1 sur le socle 111 du conduit 110 sont ménagés sur l'enveloppe 2 suivant le cercle médian C. Ces seconds moyens de fixation, aptes à coopérer avec des glissières 118 de plus faible écartement, comportent deux parties, l'une d'appui, l'autre de verrouillage.

La partie d'appui de ces seconds moyens de verrouillage est constituée par des pattes d'appui rigides 25 ménagées en saillie extérieure radiale de l'enveloppe 2 pour prendre appui contre la face intérieure (face avant) du fond 112 du socle 111 du conduit 110.

La partie de verrouillage des seconds moyens de fixation comporte quant à elle quatre doigts de verrouillage 26 ménagés sur l'enveloppe 2 et faisant saillie extérieurement suivant une direction commune qui, in situ, se confond avec la direction longitudinale du conduit 110. Ces doigts de verrouillage 26 sont agencés pour franchir, à la faveur d'une contraction élastique radiale de l'enveloppe cylindrique 2, les glissières 118 du socle 111 du conduit 110 et venir ainsi en prise sous ces glissières après que l'enveloppe 2 a spontanément repris sa position de repos.

Dans sa configuration illustrée par la figure 1, la boîte 1 selon l'invention sert à l'implantation d'un appareillage électrique unitaire de taille restreinte. La boîte 1 est donc associée de manière individuelle, en combinaison avec la boîte 1, à cet appareillage unitaire.

Toutefois, il est également possible, conformément au but poursuivi dans le cadre de la présente invention et, comme cela est illustré par les figures 2 et 3, de réaliser, au moyen de deux boîtes 1 jumelées, l'implantation d'un appareillage électrique double tel que celui représenté sous la référence générale 100 ou d'un appareillage unitaire de plus grande dimension longitudinale.

Il est en effet prévu de conférer une capacité de modularité à la boîte 1. Plus précisément, la boîte 1 présente une ligne d'amorce de rupture 27 s'étendant sur l'enveloppe cylindrique 2 et le fond 4 pour permettre le détachement d'une portion latérale 28 de la boîte 1. Cette ligne d'amorce de rupture 27 s'étend dans un plan qui est parallèle à l'axe 2.3 de l'enveloppe cylindrique 2, mais qui ne contient pas cet axe. Ainsi, lorsque la partie latérale 28 de la boîte 1 est détachée, il se dégage, à la faveur de la ligne d'amorce de rupture 27, un bord latéral de découpe qui, désigné par la même référence 27, délimite une ouverture latérale de communication 29 par laquelle deux boîtes 1 identiques ainsi tronquées adjacentes, peuvent être réunies, comme cela est représenté à la figure 2. Les deux boîtes 1, juxtaposées de telle sorte que leurs axes respectifs 2.3 soient parallèles, sont jointives par leurs bords latéraux de découpe 27 respectifs. Le jumelage ainsi obtenu de deux boîtes 1 permet d'obtenir un boîtier double qui, offrant un plus grand volume intérieur, est apte à accueillir les parties arrières des deux mécanismes 101 de l'appareillage 100 ou la partie arrière d'un mécanisme d'appareillage simple de plus grande dimension longitudinale.

La ligne d'amorce de rupture 27 s'étend dans un plan qui se trouve entre l'axe 2.3 et un plan tangent à la surface extérieure de l'enveloppe 2, à distance de ceux-ci.

Ainsi, la portion latérale est formée d'une portion cylindrique de l'enveloppe 2, et d'une portion plate du fond 4.

En faisant varier la distance du plan contenant la ligne d'amorce de rupture 27 à l'axe 2.3, on fait bien entendu varier la largeur de l'ouverture 29. Pour permettre le passage d'un appareillage simple de grande dimension longitudinale, la ligne d'amorce de rupture 27 est située à une distance de l'axe 2.3 telle que la largeur de l'ouverture 29 est supérieure à la largeur de l'appareillage.

La boîte modulaire 1 est en outre pourvue de moyens de réception de l'appareillage électrique 100, et plus précisément de son mécanisme 101, dans le volume intérieur qu'elle délimite. Ces moyens de réception sont en l'espèce, réalisés sous la forme de quatre bossages intérieurs 18 qui sont régulièrement répartis sur la face intérieure de l'enveloppe 2 et qui sont adjacents au bord avant ouvert 2.2 de cette enveloppe. Chacun de ces bossages intérieurs 18 présentes une face avant 18.1 située dans le même plan que le bord avant ouvert 2.2 de l'enveloppe cylindrique 2 et, par conséquent, perpendiculaire à l'axe 2.3 de cette enveloppe. Un perçage taraudé 19 est ménagé parallèlement à l'axe 2.3 dans chacun des bossages intérieurs 18 et débouche sur la face avant 18.1 de chaque bossage 18 pour recevoir la vis de fixation 104 associée à la plaque de fixation 102 de l'appareillage 100.

Dans l'exemple illustré par la figure 3, où les deux boîtes 1 sont réunies pour former un boîtier d'ensemble double, seul le perçage 19 opposé à la partie latérale détachée 28 de chacune des deux boîtes modulaires 1 est utilisé pour recevoir la vis 104 correspondante. Il est toutefois entendu que les autres perçages 19 pourront servir dans d'autres configurations, notamment lorsque la boîte 1 est utilisée de façon unitaire, pour l'implantation d'un appareillage unique de dimension restreinte.

Quelle que soit la configuration d'implantation envisagée, les moyens de réception et de fixation de la boîte modulaire 1 sont agencés de telle manière que la face avant 107 de l'appareillage 100 affleure approximativement la face avant 116 du couvercle 115 du conduit 110. Par "approximativement" on entend que la face avant de l'appareillage n'est pas nécessairement située dans l'exact prolongement du couvercle du conduit mais peut en pratique s'étendre légèrement en retrait ou en saillie de celui-ci.

Pour permettre l'installation de l'appareillage 100 et l'accès à sa face avant 107, le couvercle 115 est sectionné de part et d'autre de la zone d'implantation de l'appareillage 100 dans le conduit 110. L'ouverture ainsi laissée par cette interruption localisée du couvercle 115 du conduit 110 est obturée à l'aide d'un cache ajouré ou plastron (non représenté) qui se substitue ainsi localement à la portion de couvercle 115 manquante. Ce plastron présente un ajour de forme et de dimension adaptées au contour extérieur de la face avant utile de l'enjoliveur de l'appareillage en cause, de manière à permettre un accès direct à cette face. Ainsi, au travers de cet ajour, la face avant utile de l'appareillage affleure (approximativement) la face avant de ce plastron ou s'étend légèrement en retrait de cette face avant. De la sorte, le plastron assure la continuité du couvercle 115 du conduit 110 tout en permettant un accès à la face avant utile de l'appareillage affleurant les faces avant du plastron et du couvercle 115.

En variante, on pourrait également prévoir que le couvercle 115 soit localement découpé de manière à ménager dans celui-ci, sans rompre sa continuité, une ouverture située au droit de la zone d'implantation de l'appareillage 100 dans le conduit 110. L'ouverture ainsi ménagée dans le couvercle 115 serait alors entièrement recouverte par l'enjoliveur 105 de l'appareillage 100, avec de préférence un léger débordement de cet enjoliveur autour de l'ouverture.

Aux figures 5 et 6 on a représenté un second mode de réalisation dans lequel la modularité de la boîte, ici désignée par la référence générale 30, a été encore augmentée. Cette boîte 30 présente en effet, outre son enveloppe cylindrique 31 d'axe 31.1 et son fond 32, deux lignes d'amorce de rupture 33, symétriques l'une de l'autre par rapport à l'axe 31.1 de l'enveloppe cylindrique 31. Ces deux lignes d'amorce de rupture 33 permettent le détachement de deux portions latérales 34 de la boîte 30, dégageant deux ouvertures latérales par chacune desquelles la boîte en question peut être associée à une boîte supplémentaire.

On réalise ainsi, comme illustré par la figure 6, la réunion de trois boîtes 30 successives, voire même davantage, ce qui permet d'implanter dans le conduit 110 un nombre quelconque d'appareillages électriques et/ou un appareillage électrique à mécanisme simple ou multiple de grande dimension longitudinale. Autrement dit, la longueur du boîtier modulable formé de la réunion des boîtes modulaires 30 peut être adaptée à volonté au nombre et à la dimension du ou des appareillages à implanter.

De même, l'ouverture circulaire 119 ménagée dans le fond 112 du socle 111 du conduit 110 sera répliquée un nombre de fois correspondant au nombre de boîtes 30 ainsi associées, avec, entre chaque ouverture, un décalage correspondant à l'entraxe existant entre deux boîtes réunies consécutives, cet entraxe étant nécessairement, du fait de la troncature opérée sur la boîte, inférieur au diamètre de celle-ci. On notera à ce propos que, le fait d'utiliser une boîte modulaire offre l'avantage supplémentaire de ne nécessiter, pour la réalisation des ouvertures 119 dans le fond 112 du socle 111, qu'un seul outillage réalisant un seul type d'ouverture circulaire sensiblement de même diamètre que celui de la boîte. L'ouverture obtenue avec cet outillage doit simplement être répliquée autant de fois que nécessaire, avec le décalage voulu (entraxe inférieur au diamètre de l'ouverture 119), pour aboutir à une ouverture globale de plus grande dimension et de forme parfaitement adaptée à celle du contour du boîtier modulable d'ensemble obtenu par l'association d'une série de boîtes modulaires.

Par ailleurs, dans ce second mode de réalisation, il est prévu des moyens de liaison pour assurer une cohésion autonome d'ensemble du boîtier d'encastrement globalement formé par les boîtes 30 réunies. On comprend que de tels moyens de liaison permettent de réaliser, non pas seulement une simple réunion des boîtes modulaires juxtaposées et positionnées les unes par rapport aux autres grâce à leur fixation individuelle au conduit 110, (comme cela est le cas pour le premier mode de réalisation précédemment décrit en référence aux figures 1 à 4), mais un véritable assemblage de ces boîtes modulaires 30 deux à deux pour obtenir un boîtier monobloc, manipulable d'un seul tenant séparément du conduit 110. Il est ainsi en particulier possible d'utiliser le boîtier formé par cet assemblage de boîtes modulaires pour y pré-installer et, éventuellement, précâbler les appareillages électriques à implanter. Cette pré-installation peut même être effectuée en atelier avant d'être expédiée sur le chantier.

Plus précisément, dans l'exemple illustré aux figures 5 et 6, les moyens de liaison des boîtes entre elles comportent d'une part une glissière 35 ménagée en saillie de la face intérieure de l'enveloppe latérale 31 de chaque boîte modulaire 30, parallèlement à l'axe 31.1, le long de la partie de la ligne d'amorce de rupture 33 ménagée sur l'enveloppe 31, c'est-à-dire, après détachement de la portion latérale 34, le long de la partie correspondante du bord de découpe 33. Les moyens de liaison comportent d'autre part une clavette 36 en forme générale de cornière dont les branches sont aptes à être reçues dans les glissières adjacentes 35 de deux boîtes consécutives, jointives par leurs bords de découpe respectifs.

Les glissières de liaison 35 sont de préférence venues de matière, en une seule pièce, par exemple en matière plastique moulée, avec le reste de l'enveloppe 31.

Bien entendu, la forme de réalisation des moyens de liaison de deux boîtes consécutives entre elles n'est pas limitée à celle décrite ci-dessus en référence aux figures 5 et 6. On pourrait par exemple envisager de réaliser ces moyens de liaison sous la forme de glissières complémentaires, l'une mâle l'autre femelle, ménagées le long de la partie du bord de découpe 33 appartenant à l'enveloppe 31, de part et d'autre de l'ouverture latérale de communication, et agencées telle manière que les glissières adjacentes de deux boîtes consécutives accolées bord à bord s'emboîtent l'une dans l'autre dans un mouvement d'assemblage suivant une direction parallèle à l'axe 31.1 de l'enveloppe cylindrique 31, aucune clavette ou agrafe extérieure n'étant alors nécessaire.

Quelle que soit la solution adoptée, il sera préférable de prévoir des moyens de verrouillage de ces moyens de liaison. Ces moyens de verrouillages pourront par exemple être réalisés par un emboîtement serré de la clavette dans les glissières (ou des glissières l'une dans l'autre dans le cas d'une liaison par glissières complémentaires) ou sous la forme de moyens d'encliquetage agencés pour immobiliser temporairement la clavette dans les glissières (ou les glissières complémentaires l'une dans l'autre) en fin de course.

## Revendications

1. Boîte (1 ; 30) pour l'implantation encastrée d'un appareillage électrique (100) dans un conduit de câblage (110) de profondeur (p) inférieure à celle (P) de l'appareillage, comportant une enveloppe latérale (2 ; 31) présentant une forme cylindrique et délimitant un volume intérieur d'accueil de l'appareillage, fermée à l'arrière par un fond (4 ; 32) et ouverte à l'avant et pourvue d'une part de moyens pour sa fixation dans le conduit de telle manière que, traversant le fond de ce conduit à la faveur d'un ajour ménagé dans ce dernier, la boîte déborde, avec l'appareillage qu'elle contient, en arrière dudit conduit, et d'autre part de moyens de réception de l'appareillage électrique (100) dans son volume intérieur, **caractérisée en ce qu'**elle présente au moins une ligne d'amorce de rupture (27 ; 33) s'étendant dans un plan qui est parallèle à l'axe (2.3 ; 31.1) de l'enveloppe cylindrique, mais qui ne contient pas cet axe, et agencée pour permettre le détachement d'une portion latérale (28 ; 34) selon un bord latéral de découpe délimitant une ouverture latérale de communication par laquelle deux boîtes identiques ainsi tronquées peuvent être réunies pour former un boîtier de plus grand volume intérieur, apte à accueillir plusieurs appareillages ou un appareillage de plus grande dimension, cette ligne d'amorce de rupture (27 ; 33) est agencée de telle sorte que, après troncature, deux boîtes adjacentes réunies soient jointives par leurs bords latéraux de découpe respectifs (27 ; 33).

2. Boîte (30) selon la revendication 1, présentant deux lignes d'amorce de rupture (33) agencées pour permettre le détachement de deux portions latérales (34) pour la réunion d'au moins trois boîtes.

3. Boîte (30) selon la revendication 2, dans laquelle les deux lignes d'amorce de rupture (33) sont symétriques de part et d'autre de l'axe (31.1) de l'enveloppe cylindrique (31).

4. Boîte (1) selon l'une des revendications précédentes, dans laquelle les moyens de fixation au conduit comportent au moins deux patins latéraux (5, 6) agencés extérieurement sur l'enveloppe (2) pour venir en prise avec deux glissières associées (118) ménagées longitudinalement sur le fond (112) du conduit (110).

5. Boîte (1) selon la revendication 4, dans laquelle l'un au moins (6) des patins latéraux de fixation est mobile latéralement entre une configuration de blocage par friction sur la glissière (118) correspondante du conduit (110), une configuration de coulissement libre sur ladite glissière et une configuration de libération complète de sa prise avec ladite glissière.

6. Boîte (1) selon la revendication 5, dans laquelle le patin mobile (6) est soumis à l'action d'un organe de verrouillage (10) mobile entre deux positions, l'une de verrouillage maintenant le patin mobile (6) dans sa configuration de blocage sur la glissière (118) et l'autre de déverrouillage laissant le patin mobile (6) libre de revenir en configuration de coulissement libre sur la glissière (118) ou de libération complète de sa prise avec la glissière (118).

7. Boîte (1) selon la revendication 6, dans laquelle l'organe de verrouillage du patin mobile (6) comporte un élément à came (10) monté pivotant sur l'enveloppe (2) et offrant une prise quelconque (12.1) pour son actionnement à pivotement entre deux positions angulaires constituant ses positions de verrouillage et de déverrouillage précitées.

8. Boîte (1) selon la revendication 7, dans laquelle les deux positions angulaires de l'élément à came (10) sont séparées par un quart de tour.

9. Boîte (1) selon la revendication 8, dans laquelle l'élément à came (10) se compose d'un tourillon (11) reçu pour pivoter librement dans un puits ou palier (9) ménagé sur un bossage extérieur (17) de l'enveloppe (2), d'une tête (12) disposée à l'une des deux extrémités du tourillon (11) et sur laquelle est ménagée une empreinte d'actionnement (12.1) destinée à coopérer avec un outil du type tournevis, et d'un sabot (13) disposé à l'autre extrémité du tourillon (11) et présentant une forme globalement parallélépipédique allongée transversalement à l'axe de pivotement (15) du tourillon (11).

10. Boîte (1) selon la revendication 9, dans laquelle le sabot (13) de l'élément à came (10) est pourvu d'une saillie de calage (21) apte à être reçue dans une empreinte ménagée sur une partie correspondante de l'enveloppe (2) pour immobiliser temporairement l'élément à came (10) en position de verrouillage.

11. Boîte (1) selon la revendication 10, dans laquelle la saillie de calage (21) du sabot (13) est ménagée sur la pointe (16) de ce sabot, tandis que l'empreinte de réception de cette saillie est ménagée dans le patin mobile (6) au droit de l'axe de pivotement (15) de l'élément à came (10).

12. Boîte (1) selon la revendication 10, dans laquelle la saillie de calage (21) du sabot (13) est ménagée sur le dessus (14) de ce sabot, tandis que l'empreinte de réception de cette saillie est ménagée dans un épaulement arrière du puits (9) de réception du tourillon (11), la tête (12) de l'élément à came étant en butée contre un épaulement avant d'extrémité dudit puits de telle sorte que le dessus (14) du sabot (13) de l'élément à came (10) soit rappelé en appui serré contre l'épaulement arrière d'extrémité dudit puits à la faveur d'une légère déformation élastique d'ensemble de l'élément à came (10).

13. Boîte (1) selon l'une des revendications 9 à 12, dans laquelle le tourillon (11) de l'élément à came (10) présente globalement une forme de profilé à section en forme de croisillon.

14. Boîte (1) selon l'une des revendications 10 à 13, dans laquelle l'élément à came (10), avec son tourillon (11), sa tête (12) et son sabot (13), est réalisé en une seule pièce, en matière plastique moulée.

15. Boîte (1) selon l'une des revendications 4 à 14, dans laquelle les patins latéraux de fixation (5, 6) sont réalisés en une seule pièce, en matière plastique moulée avec le reste de l'enveloppe (2).

16. Boîte (1) selon la revendication 15, dans laquelle la mobilité du patin mobile (6) résulte d'une flexibilité élastique de ce patin, avec une configuration de repos correspondant à la configuration de coulissement libre sur la glissière (118) correspondante du conduit (110), en prise avec celle-ci.

17. Boîte (1 ; 30) selon l'une des revendications précédentes, dans laquelle les moyens de fixation au conduit (110) comportent des pattes d'appui rigides (25) ménagées en saillie extérieure radiale de l'enveloppe (2) pour prendre appui sur le fond (112) du conduit (110).

18. boîte (1 ; 30) selon la revendication 17, dans laquelle les moyens de fixation au conduit comportent au moins deux doigts de verrouillage (26) ménagés en saillie extérieure de l'enveloppe (2), sensiblement sur la même section (C) que les pattes d'appui rigides (25), pour venir, après déformation radiale de l'enveloppe, en prise avec la glissière correspondante (118) du fond (112) du conduit (110).

19. Boîtier formé de l'assemblage d'une succession d'au moins deux boîtes (30) selon l'une des revendications précédentes, réunies, après détachement de leurs portions latérales (34), par leurs ouvertures latérales, et comportant des moyens de liaison (35, 36) de deux boîtes consécutives entre elles pour assurer une cohésion autonome de l'ensemble qu'elles forment.

20. Boîtier selon la revendication 19, dans lequel les moyens de liaison (35, 36) sont ménagés, au moins pour partie, sur l'enveloppe latérale (31), le long du bord de découpe (33).

21. Boîtier selon la revendication 20, dans lequel les moyens de liaison comportent d'une part des glissières (35) ménagées intérieurement sur l'enveloppe latérale (31) de chaque boîte (30), le long de la ligne d'amorce de rupture (33) ou, après détachement de la partie latérale (34), du bord de découpe, et d'autre part une clavette (36) en forme de cornière dont les branches sont reçues dans les glissières adjacentes (35) des deux boîtes (30) consécutives.

22. Boîtier selon la revendication 21, dans lequel les glissières de liaison (35) sont venues de matière, en une seule pièce en matière plastique moulée, avec le reste de l'enveloppe latérale (31).

## Claims

1. A box (1 ; 30) for building an electrical device (100) into a wiring conduit (110) whose depth (p) is less than that (P) of the device, including a lateral envelope (2 ; 31) of cylindrical form delimiting an interior volume to receive the device, closed at the rear by a back (4 ; 32) and open at the front and provided with means for fastening it into the conduit so that, passing through a hole formed in the back of said conduit, the box and the device that it contains project to the rear of said conduit, and with means for receiving the electrical device (100) within its interior volume, **characterized in that** it has at least one breakage start line (27 ; 33) extending in a plane which is parallel to the axis (2.3 ; 31.1) of the cylindrical envelope, but which does not contain said axis and arranged to enable a lateral portion (28 ; 34) to be detached along a lateral severing edge delimiting a lateral communication opening by which two identical boxes truncated in this way can be joined together to form a housing with a larger interior volume, adapted to receive a plurality of devices or a larger device, said breakage start line (27 ; 33) is arranged such that, after truncation, two joined-together adjacent boxes are joined by their respective lateral severing edges (27 ; 33).

2. The box (30) claimed in claim 1, having two breakage start lines (33) arranged to enable two lateral portions (34) to be detached to join together at least three boxes.

3. The box (30) claimed in claim 2, in which the two breakage start lines (33) are symmetrical on opposite sides of the axis (31.1) of the cylindrical envelope (31).

4. The box (1) claimed in one of the preceding claims, in which the means for fastening it to the conduit include at least two lateral skids (5, 6) arranged externally on the envelope (2) to engage with two associated slides (118) formed longitudinally on the back (112) of said conduit (110).

5. The box (1) claimed in claim 4, in which at least one (6) of the lateral fastening skids is movable laterally between a configuration in which it is immobilized by friction on the corresponding slide (118) of the conduit (110), a configuration in which it slides freely on said slide, and a configuration in which it is completely released from its engagement with said slide.

6. The box (1) claimed in claim 5, in which the movable skid (6) is acted on by a locking member (10) movable between two positions, namely a locking position holding the movable skid (6) in its immobilized configuration on the slide (118) and an unlocking position leaving the movable skid (6) free to revert to its configuration of sliding freely on the slide (118) or of complete release of its engagement with the slide (118).

7. The box (1) claimed in claim 6, in which the locking member of the movable skid (6) includes a cam member (10) mounted to pivot on the envelope (2) and providing some form of engagement (12. 1) for it to be actuated by pivoting it between two angular positions constituting its aforementioned locking and unlocking positions.

8. The box (1) claimed in claim 7, in which the two angular positions of the cam member (10) are separated by a quarter-turn.

9. The box (1) claimed in claim 8, in which the cam member (10) is composed of a journal (11) received to pivot freely in a well or bearing (9) formed on an exterior boss (17) of the envelope (2), a head (12) disposed at one of the two ends of the journal (11) and on which is formed an actuation imprint (12.1) adapted to cooperate with a screwdriver or like tool, and a shoe (13) disposed at the other end of the journal (11) and having a general shape that is parallelepipedal and elongated transversely to the pivot axis (15) of the journal (11).

10. The box (1) claimed in claim 9, in which the shoe (13) of the cam member (10) has a locating projection (21) adapted to be received in an imprint formed in a corresponding part of the envelope (2) to immobilize the cam member (10) in the locking position temporarily.

11. The box (1) claimed in claim 10, in which the locating projection (21) of the shoe (13) is formed at the tip (16) of the shoe, and the imprint for receiving the projection is formed in the movable shoe (6) facing the pivot axis (15) of the cam member (10).

12. The box (1) claimed in claim 10, in which the locating projection (21) of the shoe (13) is formed on the top (14) of the shoe and the imprint for receiving the projection is formed in a rear shoulder of the well (9) for receiving the journal (11), the head (12) of the cam member being abutted against an end front shoulder of said well so that the top (14) of the shoe (13) of the cam member (10) is pressed tightly against the end rear shoulder of the well by virtue of slight elastic deformation of the cam member (10) as a whole.

13. The box (1) claimed in one of claims 9 to 12, in which the journal (11) of the cam member (10) has the form of a bar of cross-shaped cross-section.

14. The box (1) claimed in one of claims 10 to 13, in which the cam member (13), its journal (11), its head (12) and its shoe (13) are formed in one piece, from molded plastics material.

15. The box (1) claimed in one of claims 4 to 14, in which the lateral fastening skids (5, 6) are formed in one piece, from plastics material molded with the remainder of the envelope (2).

16. The box (1) claimed in claim 15, in which the mobility of the movable skid (6) is the result of the resilience of the skid, with a relaxed configuration corresponding to the configuration in which it is engaged with and slides freely on the corresponding slide (118) of the conduit (110).

17. The box (1 ; 30) claimed in one of the preceding claims, in which the means for fastening it to the conduit (110) include rigid bearing lugs (25) projecting radially outward from the envelope (2) and adapted to bear on the back (112)of the conduit (110).

18. The box (1 ; 30) claimed in claim 17, in which the means for fastening to the conduit include at least two locking fingers (26) projecting externally from the envelope (2), on substantially the same section (C) as the rigid bearing lugs (25), so as to engage, after radial deformation of the envelope, with the corresponding slide (118) of the back (112) of the conduit (110).

19. A housing formed by assembling a succession of at least two boxes (30) as claimed in one of the preceding claims, joined together, after detaching their lateral portions (34), by their lateral openings, and including means (35, 36) for connecting two consecutive boxes together to ensure autonomous cohesion of the assembly that they form.

20. The housing claimed in claim 19, in which the connecting means (35, 36) are at least partly formed on the lateral envelope (31) along the severing edge.

21. The housing claimed in claim 20, in which the connecting means include slides (35) formed on the inside of the lateral envelope (31) of each box (30), along the breakage start line (33) or, after detaching the lateral part (34), along the severing edge, and also includes a key (36) of angle-iron shape whose branches are received in the adjacent slides (35) of two consecutive boxes (30).

22. The housing claimed in claim 21, in which the connecting slides (35) are molded in one piece with the remainder of the lateral envelope (31) from plastics material.

## Patentansprüche

1. Dose (1; 30) zum Unterputz-Einbau eines elektrischen Installationsgeräts (100) in einen Installationskanal (110), dessen Tiefe (p) geringer ist als die Tiefe (P) des Installationsgeräts, mit einer zylinderförmigen und einen Innenraum zur Aufnahme des Installationsgeräts begrenzenden seitlichen Ummantelung (2; 31), die an der Rückseite durch einen Boden (4; 32) geschlossen und an der Vorderseite offen ist und einerseits mit Mitteln zu ihrer Befestigung in dem Kanal versehen ist, derart, dass die Dose, den Boden des Kanals mit Hilfe einer in diesem ausgebildeten Öffnung durchquerend, an der Rückseite des Kanals zusammen mit dem Installationsgerät, das sie enthält, übersteht, und andererseits mit Mitteln zur Aufnahme des elektrischen Installationsgeräts (100) in ihrem Innenraum versehen ist,
**dadurch gekennzeichnet, dass** sie wenigstens eine Ausbruchlinie (27; 33) aufweist, die sich in einer Ebene erstreckt, die zu der Achse (2.3; 31.1) der zylinderförmigen Ummantelung parallel ist, jedoch diese Achse nicht enthält, und die ausgebildet ist, um das Abtrennen eines Seitenstücks (28; 34) entlang eines seitlichen Schnittrands zu ermöglichen, der eine seitliche Verbindungsöffnung begrenzt, durch die zwei identische, auf diese Weise gekappte Dosen miteinander verbunden werden können, um eine Dose mit größerem Innenraum zu bilden, die mehrere Installationsgeräte oder ein größeres Installationsgerät aufzunehmen vermag, wobei diese Ausbruchlinie (27; 33) derart ausgebildet ist, dass nach dem Kappen zwei miteinander verbundene, nebeneinanderliegende Dosen durch ihre jeweiligen seitlichen Schnittränder (27; 33) aneinanderstoßen.

2. Dose (30) nach Anspruch 1,
zwei Ausbruchlinien (33) aufweisend, die angeordnet sind, um das Abtrennen von zwei Seitenstücken (34) zu ermöglichen, um wenigstens drei Dosen miteinander zu verbinden.

3. Dose (30) nach Anspruch 2,
bei der die beiden Ausbruchlinien (33) beiderseits der Achse (31.1) der zylinderförmigen Ummantelung (31) symmetrisch sind.

4. Dose (1) nach einem der vorhergehenden Ansprüche,
bei der die Mittel zum Befestigen an dem Kanal wenigstens zwei seitliche Gleitbacken (5, 6) aufweisen, die außen auf der Ummantelung (2) angeordnet sind, um mit zwei zugeordneten, längs auf dem Boden (112) des Kanals (110) ausgebildeten Gleitschienen (118) in Eingriff zu gelangen.

5. Dose (1) nach Anspruch 4,
bei der wenigstens einer (6) der seitlichen Befestigungsgleitbacken zwischen einer Arretierstellung durch Reibung auf der entsprechenden Gleitschiene (118) des Kanals (110), einer freien Gleitstellung auf der Gleitschiene und einer vollkommenen Freigabestellung aus seinem Eingriff mit der Gleitschiene seitlich beweglich ist.

6. Dose (1) nach Anspruch 5,
bei der der bewegliche Gleitbacken (6) der Einwirkung eines Verriegelungsorgans (10) unterliegt, das zwischen zwei Stellungen beweglich ist, einer Verriegelungsstellung, die den beweglichen Gleitbacken (6) in seiner Arretierstellung auf der Gleitschiene (118) hält, und einer Freigabestellung, die den beweglichen Gleitbacken (6) in die freie Gleitstellung auf der Gleitschiene (118) oder die vollkommene Freigabestellung aus seinem Eingriff mit der Gleitschiene (118) frei zurückkehren lässt.

7. Dose (1) nach Anspruch 6,
bei der das Verriegelungsorgan des beweglichen Gleitbackens (6) ein Nockenelement (10) umfasst, das auf der Ummantelung (2) schwenkbar angebracht ist und einen beliebigen Eingriff (12.1) für seine Schwenkbetätigung zwischen zwei Winkelstellungen bietet, die seine vorgenannten Arretierstellung und Freigabestellung bilden.

8. Dose (1) nach Anspruch 7,
bei der zwischen den beiden Winkelstellungen des Nockenelements (10) eine Vierteldrehung liegt.

9. Dose (1) nach Anspruch 8,
bei der das Nockenelement (10) zusammengesetzt ist aus einem Zapfen (11), der zum freien Drehen in einer Buchse oder einem Lager (9) aufgenommen ist, die bzw. das auf einer äußeren Vorwölbung (17) der Ummantelung (2) ausgebildet ist, aus einem Kopf (12), der an einem der beiden Enden des Zapfens (11) angeordnet ist und auf dem ein Betätigungsprofil (12.1) ausgebildet ist, das dazu bestimmt ist, mit einem Werkzeug vom Typ Schraubendreher zusammenzuwirken, und aus einem Schuh (13) der an dem anderen Ende des Zapfens (11) angeordnet ist und eine allgemein parallelepipedische, quer zur Drehachse (15) des Zapfens (11) länglich verlaufende Form aufweist.

10. Dose (1) nach Anspruch 9,
bei der der Schuh (13) des Nockenelements (10) mit einem Feststellvorsprung (21) versehen ist, der in einem Profil aufgenommen zu werden vermag, das auf einem entsprechenden Teil der Ummantelung (2) ausgebildet ist, um das Nockenelement (10) zeitweise in der Arretierstellung zu blockieren.

11. Dose (1) nach Anspruch 10,
bei der der Feststellvorsprung (21) des Schuhs (13) auf der Spitze (16) des Schuhs ausgebildet ist, während das Profil zur Aufnahme dieses Vorsprungs in dem beweglichen Gleitbacken (6) rechtwinklig zur Drehachse (15) des Nockenelements (10) ausgebildet ist.

12. Dose (1) nach Anspruch 10,
bei der der Feststellvorsprung (21) des Schuhs (13) auf der Oberseite (14) des Schuhs ausgebildet ist, während das Profil zur Aufnahme dieses Vorsprungs in einem hinteren Absatz der Buchse (9) zur Aufnahme des Zapfens (11) ausgebildet ist, wobei der Kopf (12) des Nockenelements gegen einen vorderen äußeren Absatz der Buchse solchermaßen in Anschlag ist, dass die Oberseite (14) des Schuhs (13) des Nockenelements (10) in enger Anlage gegen den hinteren äußeren Absatz der Buchse mittels einer leichten elastischen Verformung des gesamten Nockenelements (10) zurückgestellt wird.

13. Dose (1) nach einem der Ansprüche 9 bis 12,
bei der der Zapfen (11) des Nockenelements (10) allgemein eine Profilform mit kreuzschlitzförmigem Querschnitt hat.

14. Dose (1) nach einem der Ansprüche 10 bis 13,
bei der das Nockenelement (10) mit seinem Zapfen (11), seinem Kopf (12) und seinem Schuh (13) einstückig aus gegossenem Kunststoff ausgeführt ist.

15. Dose (1) nach einem der Ansprüche 4 bis 14,
bei der die seitlichen Befestigungsgleitbacken (5, 6) einstückig aus gegossenem Kunststoff zusammen mit der übrigen Ummantelung (2) ausgeführt sind.

16. Dose (1) nach Anspruch 15,
bei der die Beweglichkeit des beweglichen Gleitbackens (6) aus einer elastischen Biegsamkeit des Gleitbackens resultiert, mit einer Ruhestellung, die der freien Gleitstellung auf der entsprechenden Gleitschiene (118) des Kanals (110) in Eingriff mit dieser entspricht.

17. Dose (1; 30) nach einem der vorhergehenden Ansprüche,
bei der die Mittel zur Befestigung am Kanal (110) starre Haltelaschen (25) aufweisen, die radial außen an der Ummantelung (2) vorstehend ausgebildet sind, um auf dem Boden (112) des Kanals (110) zur Anlage zu kommen.

18. Dose (1; 30) nach Anspruch 17,
bei der die Mittel zur Befestigung am Kanal wenigstens zwei Verriegelungsfinger (26) aufweisen, die außen an der Ummantelung (2) vorstehend im Wesentlichen im gleichen Abschnitt (C) wie die starren Haltelaschen (25) ausgebildet sind, um nach radialer Verformung der Ummantelung mit der entsprechenden Gleitschiene (118) des Bodens (112) des Kanals (110) in Eingriff zu gelangen.

19. Gehäuse, das aus der Verbindung einer Folge von wenigstens zwei Dosen (30) nach einem der vorhergehenden Ansprüche gebildet ist, die nach Abtrennen ihrer Seitenstücke (34) durch ihre seitlichen Öffnungen miteinander verbunden sind, und das Mittel (35, 36) zur Verbindung von zwei aufeinanderfolgenden Dosen miteinander aufweist, um einen selbständigen Zusammenhalt der durch sie gebildeten Einheit zu gewährleisten.

20. Gehäuse nach Anspruch 19,
bei dem die Verbindungsmittel (35, 36) wenigstens zum Teil auf der seitlichen Ummantelung (31) entlang des Schnittrands (33) ausgebildet sind.

21. Gehäuse nach Anspruch 20,
bei dem die Verbindungsmittel einerseits Gleitschienen (35) aufweisen, die innen auf der seitlichen Ummantelung (31) jeder Dose (30) entlang der Ausbruchlinie (33) oder nach Abtrennen des Seitenteils (34) entlang des Schnittrands ausgebildet sind, und andererseits einen eckförmigen Keil (36), dessen Schenkel in den angrenzenden Gleitschienen (35) der beiden aufeinanderfolgenden Dosen (30) aufgenommen sind.

22. Gehäuse nach Anspruch 21,
bei dem die Verbindungsgleitschienen (35) materialeinheitlich einstückig aus gegossenem Kunststoff zusammen mit der übrigen seitlichen Ummantelung (31) ausgeführt sind.
